# EUROPEAN PATENT SPECIFICATION

(11) **EP 2 579 078 B1**
(45) Date of publication and mention of the grant of the patent: **03.12.2014**
(21) Application number: 11183988.2
(22) Date of filing: 05.10.2011
(51) Int. Cl.: G02B 6/44, H02G 15/013, F16G 11/02

(54) **Splice cassette for optical fibers comprising a strain relief device for optical fibre bundles**
Spleißkassette für Glasfasern mit Zugentlastungsvorrichtung für Glasfaserbündel
Cassette d'épissure pour fibres optiques comprenant un dispositif de réduction de tension pour faisceaux de fibres optiques

(43) Date of publication of application: 10.04.2013
(73) Proprietor: CCS Technology, Inc., Wilmington, DE 19803 (US)
(72) Inventor: Stöcklein, Waldemar, Dr., 96450 Coburg (DE); Müller, Thorsten, 58708 Menden (DE)
(74) Representative: Sturm, Christoph

(56) References cited:
- DE-A1- 4 439 853
- DE-U1- 9 210 229
- US-A- 3 809 798
- US-A- 5 742 982
- US-A1- 2006 081 744

## Description

The present patent application relates to an optical fiber splice cassette according to the preamble of claim 1.

When building data transmission networks from optical cables, it is necessary to interconnect optical fibers of the optical cables and to store excess lengths of said optical fibers. The connection points and excess lengths must be handled in fiber optic distribution devices outside of buildings and inside of buildings.

Outside of buildings for so-called outdoor applications, connection points between optical fibers and excess lengths thereof, are typically accommodated in fiber optic distribution devices designed as cable sleeves or street cabinets. Inside of buildings for so-called indoor applications, connection points between optical fibers and excess lengths thereof, are typically accommodated in fiber optic distribution devices designed as distribution cabinets or distribution frames. Fiber optic distribution devices designed as wall boxes can be used both outside of buildings and inside of buildings.

Fiber optic fiber distribution devices known from prior art comprise a housing and optical fiber handling components, specifically splice cassettes and/or patch panels and/or strain relief devices, positioned inside the housing for handling connection points and excess lengths of optical fibers and for providing strain relief for the optical cables. One of the key issues is strain relieving of optical fiber bundles in the region of splice cassettes.

Optical fiber bundles comprise a plurality of optical fibers being surrounded by a buffer tube which may be an extruded polymeric tube made of a thermoplastic material.

To avoid mechanical stress on the optical fibers of an optical fiber bundle, the buffer tube of the same has to be fixed to the splice cassette. This is very often done with cable ties. The use of cable ties is very simple and cheap. However when the diameters of the optical fiber bundles get smaller and smaller, the risk to damage the buffer tubes by fixing the cable ties to the buffer tubes is strongly increasing, because the force to attach the cable tie cannot easily be controlled.

An optical fiber splice cassette according to the preamble of claim 1 is known from DE 44 39 853 A1. Other prior art is known from US 2006/08177 A1 and from US 5 472 982 A.

The present application is based on the problem of providing a novel optical fiber splice cassette being suitable also for fiber bundles having a relative small diameter.

The optical fiber splice cassette according to the present patent application is defined in claim 1.

Preferred embodiments of the strain relief device are given in the dependent claims and the description below. Exemplary embodiments will be explained in more detail with reference to the drawing, in which:
- Figure 1: shows a splice cassette comprising a novel strain relief device according to a first embodiment;
- Figure 2: shows a detail of the splice cassette of Figure 1 in the region of the novel strain relief device in an opened installation state of the strain relief device;
- Figure 3: shows the detail of Figure 2 together with a fiber bundle in an closed operation state of the strain relief device;
- Figure 4: a schematic cross section through a strain relief device and a fiber bundle;
- Figure 5: shows a detail of a splice cassette in the region of a novel strain relief device according to a second embodiment in an opened installation state of the strain relief device; and
- Figure 6: shows the detail of Figure 4 together with a fiber bundle in a closed operation state of the strain relief device.

As shown in the Figures, the present application relates to a strain relief device 10 for optical fiber bundles and to a splice cassette 11 for optical fibers comprising at least one strain relief device 10. In the shown preferred embodiments the strain relief device 10 is an integral element of a splice cassette 11.

The strain relief device 10 comprises a basic body 12. The basic body 12 has a first surface 13 for guiding an optical fiber bundle 14 to be strained relieved. In addition, the basic body 12 has a second surface 15 for guiding a cable tie 16 surrounding at least partially said basic body 12 and said fiber bundle 14 in an operation state of the strain relief device 10. The first surface 13 of the basic body 12 for guiding an optical fiber bundle 14 has a cross section being shaped like a circular arc. In addition, the second surface 15 of the basic body 12 has a cross section being shaped like a circular arc.

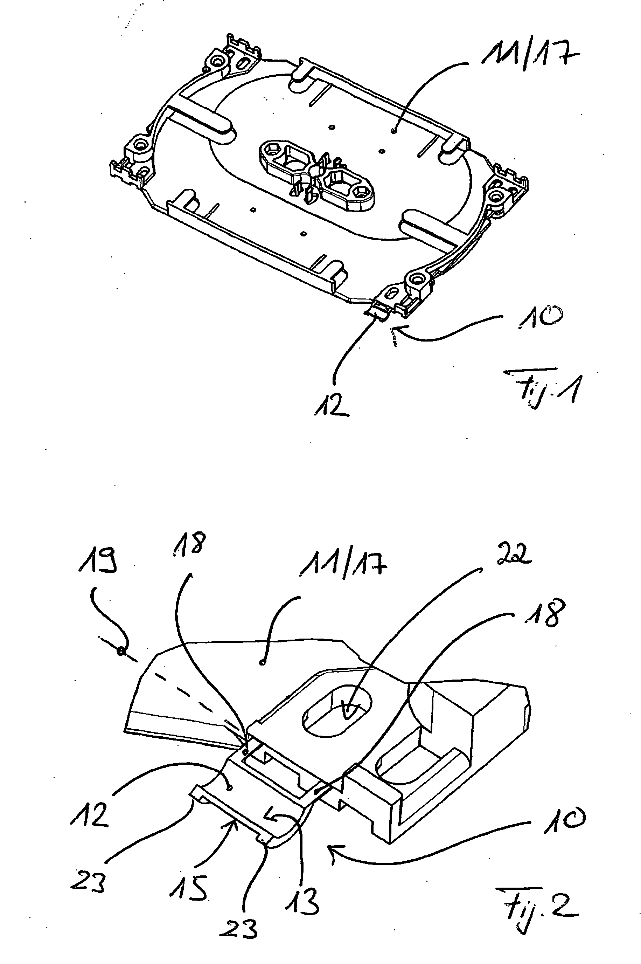

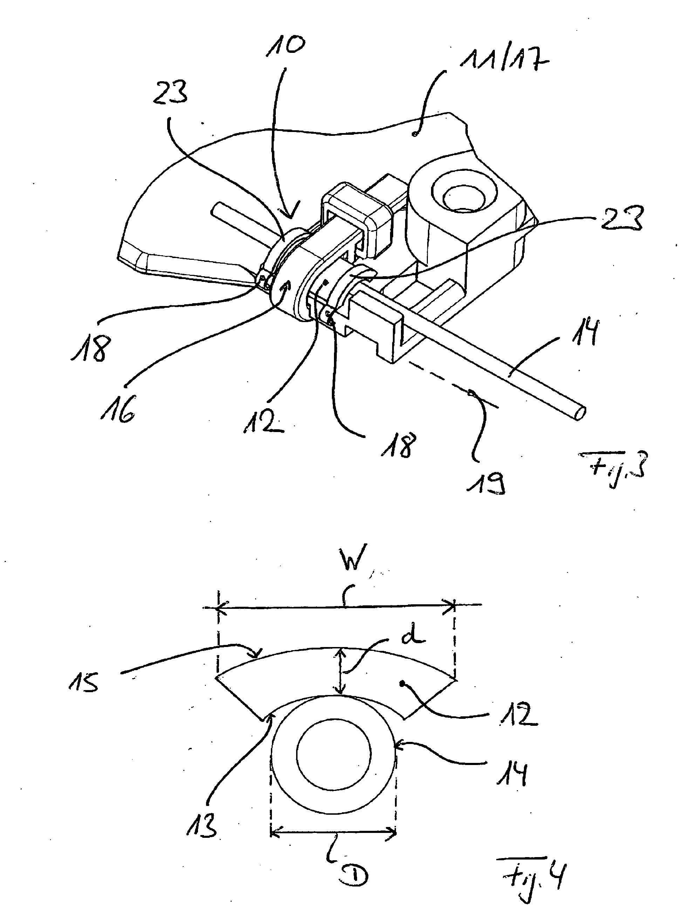

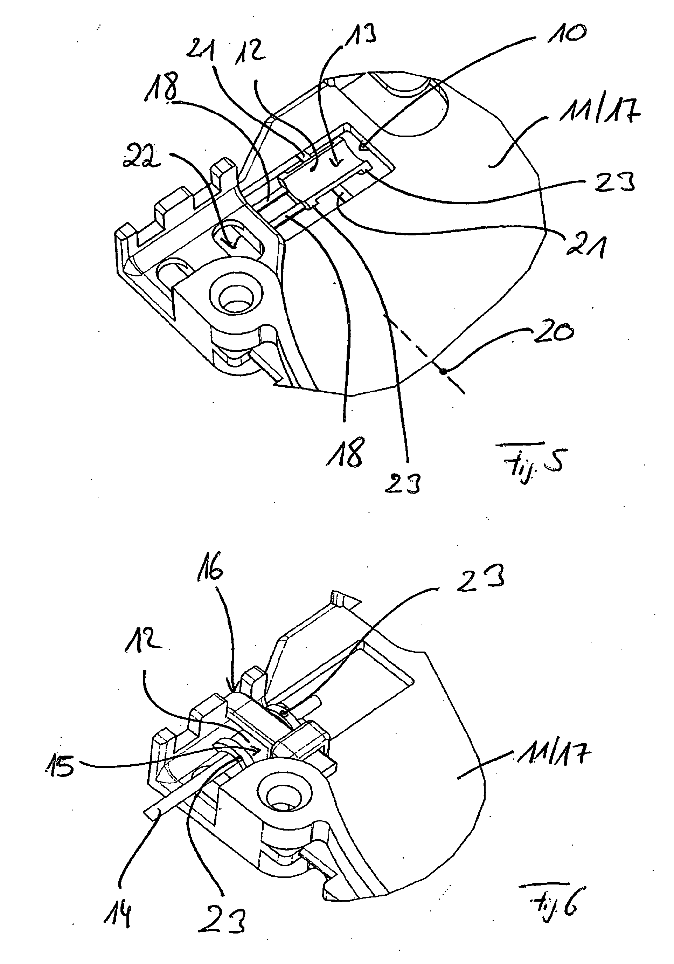

As mentioned above, the strain relief device 10 is in the shown preferred embodiments designed an integral element of a splice cassette 11. The basic body 12 of the strain relief device 10 is hinged to a basic body 17 of the splice cassette 11 by at least one hinge 18 so that the basic body 12 of the strain relief device 10 is transferable between an opened installation state (see Figures 2, 5) and a closed operation state (see Figures 3, 4, 6) by pivoting the basic body 12 of the strain relief device 10 around the or each hinge 18.

In the embodiment shown in Figures 1 to 3, the basic body 12 of the strain relief device 10 is pivotable around a hinge axis 19 provided by the hinges 18 running in general parallel to the optical fiber bundle 14 to be strained relieved. The hinges 18 are designed as film hinges.

In the embodiment shown in Figures 5 and 6, the basic body 12 of the strain relief device 10 is pivotable around a hinge axis 20 provided by the hinges 18 running in general perpendicular to the optical fiber bundle 14 to be strained relieved. The hinges 18 are designed as film hinges.

In the embodiment shown in Figures 5 and 6, the basic body 12 of the strain relief device 10 is in its installation state before the first use of the same fixed to the basic body 17 of the splice cassette 11 by the hinges 18 and in addition by fixing elements 21. For transferring the basic body 12 between the opened installation state shown in figure 5 and the closed operation state the fixing elements 21 become cut through so that the basic body 12 can be pivoted around the hinges 18.

As mentioned above, the hinges 18 are designed as film hinges. The thickness of the hinges 18 depends on the selected material of the splice cassette body and is preferably in the order of 0.1 mm. The material of the hinges 18 should be flexible enough so that the basic body 12 of the strain relief device 10 can be pivoted around the hinges axis 19, 20 without any risk to break the hinges 18. The length of the hinges 18 depends on the diameter of the fiber bundle 14 which are supposed to be strain relieved. The length is preferably in the order of 3 mm for fiber bundle diameters D (see Figure 4) in the range between 1 mm to 2 mm.

The basic body 12 of the strain relief device 10 is preferably curved to improve the contact between cover basic body 12 and fiber bundle 14. The radius of curvature is preferably in the range of 2 mm to 3 mm.

The thickness d of the basic body 12 (see Figure 4) of the strain relief device 10 is preferably in the order of 0.5 mm to 1 mm. The width W the basic body 12 (see Figure 4) is preferably in the range between 4 mm and 5 mm.

In the closed operation sate of the basic body 13 a cable tie 16 can be attached in the usual manner. The basic body 17 of the splice cassette 11 comprises openings 22 for receiving cable ties 16. Lateral protrusions 23 of the second surface 15 of the basic body 12 serve as stop elements for the cable tie 16.

A further improvement could be achieved if the basic body 17 of the splice cassette 10 below the position of the fiber bundle 14 is also curved (like the basic body 12 of the of the strain relief device 10). The radius of curvature should also be in the range 2 mm to 3 mm.

The present patent application describes a strain relief device 10 which is preferably integrated into splice cassette 11. This strain relief device 10 is preferably part of the splice cassette 11 and can be used when needed. This basic body 12 of the strain relief device 10 is preferably shaped like a pipe section or half pipe and can be pivoted above the fiber bundle 14 to be strain relieved to protect the fiber bundle 14 against direct contact with the cable tie 16. Thus the tensile load applied by the cable tie 16 is distributed along a longer length which enhances the friction between basic body 12 of the strain relief device 10 and fiber bundle 14 and which avoids high lateral load on the fiber bundle 14.

The surface 13 of the basic body 12 of the strain relief device 10 being in contact with the fiber bundle 14 to be strain relieved in the closed operation state could be coated with an friction increasing coating to even enhance the friction.

It is also possible that the strain relief device 10 is a separate device being independent from the splice cassette 10.

### List of reference numerals

- 10: strain relief device
- 11: splice cassette
- 12: basic body
- 13: first surface
- 14: fiber bundle
- 15: second surface
- 16: cable tie
- 17: basic body
- 18: hinge
- 19: hinge axis
- 20: hinge axis
- 21: fixing element
- 22: opening
- 23: protrusion

## Claims

1. An optical fiber splice cassette (11) comprising a strain relief device (10) for optical fiber bundles, the strain relief device (10) comprising a basic body (12) having a first surface (13) for guiding an optical fiber bundle (14) to be strained relieved and a second surface (15) for guiding a cable tie (16) surrounding at least partially said basic body (12) and said fiber bundle (14) in an operation state of the strain relief device (10), wherein the basic body (12) of the strain relief device (10) is an integral element of the optical fiber splice cassette (11), **characterised in that** the basic body (12) of the strain relief device (10) is hinged to a basic body (17) of the splice cassette (11) by at least one hinge (18) so that the basic body (12) of the strain relief device (10) is transferable between an installation state and an operation state by pivoting the basic body (12) around the or each hinge (18).

2. Optical fiber splice cassette (11) as claimed in claim 1, **characterised in that** the first surface (13) of the basic body (12) has a cross section being shaped like a circular arc.

3. Optical fiber splice cassette (11) as claimed in claim 1 or 2, **characterised in that** the second surface (15) of the basic body (12) has a cross section being shaped like a circular arc.

4. Optical fiber splice cassette (11) as claimed in one of claims 1 to 3, **characterised in that** the basic body (12) is shaped like pipe section.

5. Optical fiber splice cassette (11) as claimed in one of claims 1 to 4, **characterised in that** the basic body (12) is pivotable around a hinge axis (19) running in general parallel to the optical fiber bundle (14) to be strained relieved.

6. Optical fiber splice cassette (11) as claimed in one of claims 1 to 4, **characterised in that** the basic body (12) is pivotable around a hinge axis (20) running in general perpendicular to the optical fiber bundle (14) to be strained relieved.

7. Optical fiber splice cassette (11) as claimed in one of claims 1 to 6, **characterised in that** the or each hinge (18) is provided by a film hinge.

8. Optical fiber splice cassette (11) as claimed in one of claims 1 to 7, **characterised in that** the first surface (13) for guiding an optical fiber bundle (14) is coated with a friction increasing coating.

9. Optical fiber splice cassette (11) as claimed in one of claims 1 to 8, **characterised in that** the second surface (14) for guiding cable tie (16) comprises protrusions (23) providing a stop element for the cable tie (16).

## Patentansprüche

1. Lichtleitfaser-Spleißkassette (11), die eine Zugentlastungsvorrichtung (10) für Lichtleitfaserbündel umfasst, wobei die Zugentlastungsvorrichtung (10) einen Grundkörper (12) umfasst, der eine erste Oberfläche (13) zum Führen eines Lichtleitfaserbündels (14) besitzt, dass zugentlastet werden soll, und eine zweite Oberfläche (15) zum Führen eines Kabelbinders (16) besitzt, der zumindest teilweise den Grundkörper (12) und das Faserbündel (14) in einem Betriebszustand der Zugentlastungsvorrichtung (10) umgibt, wobei der Grundkörper (12) der Zugentlastungsvorrichtung (10) ein integraler Bestandteil der Lichtleitfaser-Spleißkassette (11) ist, **dadurch gekennzeichnet, dass** der Grundkörper (12) der Zugentlastungsvorrichtung (10) schwenkbar durch mindestens ein Gelenk (18) an einem Grundkörper (17) der Spleißkassette (11) angebracht ist, so dass der Grundkörper (12) der Zugentlastungsvorrichtung (10) zwischen einem Einrichtungszustand und einem Betriebszustand durch Schwenken des Grundkörpers (12) um das oder jedes Gelenk (18) wechseln kann.

2. Lichtleitfaser-Spleißkassette (11) nach Anspruch 1, **dadurch gekennzeichnet, dass** die erste Oberfläche (13) des Grundkörpers (12) einen Querschnitt besitzt, der wie ein Kreisbogen geformt ist.

3. Lichtleitfaser-Spleißkassette (11) nach Anspruch 1 oder 2, **dadurch gekennzeichnet, dass** die zweite Oberfläche (15) des Grundkörpers (12) einen Querschnitt besitzt, der wie ein Kreisbogen geformt ist.

4. Lichtleitfaser-Spleißkassette (11) nach einem der Ansprüche 1 bis 3, **dadurch gekennzeichnet, dass** der Grundkörper (12) wie ein Rohrabschnitt geformt ist.

5. Lichtleitfaser-Spleißkassette (11) nach einem der Ansprüche 1 bis 4, **dadurch gekennzeichnet, dass** der Grundkörper (12) um eine Gelenkachse (19), die im Allgemeinen parallel zu dem Lichtleitfaserbündel (14) verläuft, schwenkbar ist, um zugentlastet zu werden.

6. Lichtleitfaser-Spleißkassette (11) nach einem der Ansprüche 1 bis 4, **dadurch gekennzeichnet, dass** der Grundkörper (12) um eine Gelenkachse (20), die im Allgemeinen senkrecht zu dem Lichtleitfaserbündel (14) verläuft, schwenkbar ist, um zugentlastet zu werden.

7. Lichtleitfaser-Spleißkassette (11) nach einem der Ansprüche 1 bis 6, **dadurch gekennzeichnet, dass** das oder jedes Gelenk (18) durch ein Filmscharnier bereitgestellt wird.

8. Lichtleitfaser-Spleißkassette (11) nach einem der Ansprüche 1 bis 7, **dadurch gekennzeichnet, dass** die erste Oberfläche (13) zum Führen eines Lichtleitfaserbündels (14) mit einer reibungsverstärkenden Beschichtung beschichtet ist.

9. Lichtleitfaser-Spleißkassette (11) nach einem der Ansprüche 1 bis 8, **dadurch gekennzeichnet, dass** die zweite Oberfläche (14) zum Führen des Kabelbinders (16) Ausstülpungen (23) umfasst, die ein Stoppelement für den Kabelbinder (16) bereitstellen.

## Revendications

1. Cassette d'épissure pour fibres optiques (11) comprenant un dispositif de réduction de tension (10) pour des faisceaux de fibres optiques, le dispositif de réduction de tension (10) comprenant un corps de base (12) ayant une première surface (13) pour guider un faisceau de fibres optiques (14) dont les tensions doivent être réduites et une deuxième surface (15) pour guider une attache de câble (16) entourant au moins en partie ledit corps de base (12) et ledit faisceau de fibres (14) dans un état fonctionnel du dispositif de réduction de tension (10), le corps de base (12) du dispositif de réduction de tension (10) faisant partie intégrante de la cassette d'épissure pour fibres optiques (11), **caractérisée en ce que** le corps de base (12) du dispositif de réduction de tension (10) est articulé à un corps de base (17) de la cassette d'épissure (11) par au moins une charnière (18), de telle sorte que le corps de base (12) du dispositif de réduction de tension (10) puisse être transféré entre un état d'installation et un état fonctionnel en faisant pivoter le corps de base (12) autour de la ou de chaque charnière (18).

2. Cassette d'épissure pour fibres optiques (11) selon la revendication 1, **caractérisée en ce que** la première surface (13) du corps de base (12) présente une section transversale en forme d'arc de cercle.

3. Cassette d'épissure pour fibres optiques (11) selon la revendication 1 ou 2, **caractérisée en ce que** la deuxième surface (15) du corps de base (12) présente une section transversale en forme d'arc de cercle.

4. Cassette d'épissure pour fibres optiques (11) selon l'une quelconque des revendications 1 à 3, **caractérisée en ce que** le corps de base (12) a une forme similaire à une section de tuyau.

5. Cassette d'épissure pour fibres optiques (11) selon l'une quelconque des revendications 1 à 4, **caractérisée en ce que** le corps de base (12) peut pivoter autour d'un axe d'articulation (19) s'étendant en général parallèlement au faisceau de fibres optiques (14) dont les tensions doivent être réduites.

6. Cassette d'épissure pour fibres optiques (11) selon l'une quelconque des revendications 1 à 4, **caractérisée en ce que** le corps de base (12) peut pivoter autour d'un axe d'articulation (20) s'étendant en général perpendiculairement au faisceau de fibres optiques (14) dont les tensions doivent être réduites.

7. Cassette d'épissure pour fibres optiques (11) selon l'une quelconque des revendications 1 à 6, **caractérisée en ce que** la ou chaque charnière (18) est réalisée par une charnière à film.

8. Cassette d'épissure pour fibres optiques (11) selon l'une quelconque des revendications 1 à 7, **caractérisée en ce que** la première surface (13) pour guider un faisceau de fibres optiques (14) est revêtue d'un revêtement augmentant les frottements.

9. Cassette d'épissure pour fibres optiques (11) selon l'une quelconque des revendications 1 à 8, **caractérisée en ce que** la deuxième surface (14) pour guider l'attache de câble (16) comprend des saillies (23) constituant un élément de butée pour l'attache de câble (16).
